# EUROPÄISCHE PATENTSCHRIFT

(11) **EP 0 858 722 B1**
(45) Veröffentlichungstag und Bekanntmachung des Hinweises auf die Patenterteilung: **28.06.2000**
(21) Anmeldenummer: 96945514.6
(22) Anmeldetag: 18.10.1996
(51) Int. Cl.: H05B 6/12

(54) **KOCHSYSTEM**
COOKING SYSTEM
DISPOSITIF DE CUISSON

(30) Priorität: 30.10.1995 DE 19540408
(43) Veröffentlichungstag der Anmeldung: 19.08.1998
(73) Patentinhaber: Herchenbach, Wolfgang, Dr., D-86938 Schondorf/Ammersee (DE)
(72) Erfinder: Herchenbach, Wolfgang, Dr., D-86938 Schondorf/Ammersee (DE)
(86) Internationale Anmeldenummer: DE9601990
(87) Internationale Veröffentlichungsnummer: WO9716943

(56) Entgegenhaltungen:
- WO-A-91/12503
- WO-A-94/29779
- DE-U- 9 406 686
- FR-A- 2 260 113
- FR-A- 2 344 822
- US-A- 3 742 174
- US-A- 3 742 178
- US-A- 3 742 179
- US-A- 3 781 506

## Beschreibung

Die Erfindung betrifft ein Kochsystem, bestehend aus einem Kochfeld mit einer für elektromagnetische Felder durchlässigen Kochfläche (z.B. aus "Ceran") und einem darauf stehenden, durch die Kochfläche hindurch fremdbeheizten Kochgeschirr, dessen Boden temperaturgeregelt ist.

Ein solches Kochsystem ist in der EPA 0 621 739 A2, beschrieben. Es beruht auf der Erkenntnis, dass eine genaue, unter allen Umständen, unabhängig von Art und Menge des Kochguts, auch ohne Kochgut (Trockengehschutz) und auch beim Braten funktionierende Temperaturregelung eines fremdbeheizten Kochgeschirrs nur möglich ist, wenn sie von der Ist-temperatur des Kochgeschirrbodens gesteuert wird. Durch die dort gegebene thermische Rückführung wird automatisch auch die Nachwärme des Kochfelds bei der Regelung berücksichtigt. Dieses vorbekannte Kochsystem arbeitet mit einem stabförmigen Temperaturfühler, der in eine horizontale Bohrung im Kochgeschirrboden eingesteckt ist und einen einstellbaren Temperaturregler trägt (Steckthermostat), der auf der Kochfläche aufsteht und durch Bewegung eines Permanentmagneten auf einen Reedkontakt unter der Kochfläche zur Steuerung der Kochleistung einwirkt.

Aus der DE 94 06 686 U ist bekannt, im Boden des Kochgeschirrs eine als Temperatursensor wirkende Kapazität anzuordnen, die durch eine Kontaktierung mit einer Auswerteschaltung verbunden ist. Der dazu erforderliche Durchbruch in der Kochfläche ist unerwünscht, weil er zusätzliche Bearbeitungsgänge erfordert, bei Reinigung der Kochfläche stört, seine zuverlässige Abdichtung bei den herrschenden Temperaturen problematisch ist, und weil er eine exacte Plazierung des Kochgeschirrs erfordert, die beim normalen Kochen und Braten kaum einzuhalten ist.

Aufgabe der Erfindung ist es, ohne Temperaturregler auf der Kochfläche auszukommen.

Diese Aufgabe wird dadurch gelöst, dass die Temperatur des Kochgeschirrbodens elektromagnetisch drahtlos, vorzugsweise durch Hochfrequenz, von unten durch die Kochfläche hindurch abgefragt und zur thermostatischen Regelung durch Steuerung der Kochleistung eingesetzt wird.

Überschreitet die so ermittelte Isttemperatur des Kochgeschirrbodens die Solltemperatur, so wird die Kochleistung abgeschaltet oder vermindert, unterschreitet sie die Solltemperatur, so wird die Kochleistung wieder eingeschaltet oder erhöht.

Ein solches temperaturgeregeltes Kochsystem arbeitet wesentlich wirtschaftlicher als konventionelle Kochsysteme mit Leistungseinstellung. Dies gilt besonders für wässrige Speisen, die jetzt dicht unterhalb des Siedepunkts gegart werden können, sodass kein Wasser unnötig verdampft. Dabei werden bis zu 50% Energie eingespart. Milch kann nicht mehr überkochen, nichts kann mehr anbrennen, wenn nur die richtige Temperatur eingestellt wird. Komplizierte An- und Fortkoch- Programme sind völlig überflüssig.

Einer Ausführungsform der Erfindung liegt die Erkenntnis zugrunde, dass man aufgrund des Temperaturkoeffizienten des spezifischen Widerstands von Metallen die Temperatur des Kochgeschirrbodens drahtlos und berührungsfrei bestimmen kann, indem man den elektrischen Widerstand des Kochgeschirrbodens als Dämpfung einer unter der Kochfläche angeordneten, mit Solltemperatur-Einstellung ausgestatteten Sende-Einrichtung misst und als Mass für seine Temperatur auswertet. In diese Impedanzmessung gehen Temperaturänderungen im Kochgeschirrboden als Änderungen des Wirkwiderstands ein. Die Solltemperatur kann über einen auf die Sende-Einrichtung einwirkenden Stellknopf an der Front des Kochfelds oder durch Touch-Sensoren auf dem Kochfeld, wie sie heute zum Stand der Technik gehören, eingestellt werden.

Bereits 1934 wurde von Keinath (Archiv für technisches Messen, V 215-2, Januar 1934) vorgeschlagen und später von verschiedenen Autoren wieder aufgegriffen, die Temperatur einer Walze berührungslos durch Verluste von in der Walze induzierten Wirbelströmen zu messen. Bis heute wird das Verfahren jedoch nirgends angewendet, weil die verschiedensten Störgrößen das Messergebnis verfälschen. Die Anwendung für Kochzwecke wurde noch nie in Betracht gezogen. Offensichtlich hat man bisher nicht erkannt, dass der Abstand des Messobjekts als wesentlichste Störgrösse in der Kochtechnik wegen der Positionierung des Kochgeschirrs auf der Kochfläche stets der gleiche ist und daher als Störgrösse entfällt, und dass die übrigen Störgrössen durch geeignete Materialwahl und weitere Massnahmen (vgl. Anspruch 8 mit zugehöriger Beschreibung) durchaus beherrschbar sind.

In der Deutschen Patentschrift DE 31 33 063 C2 wird ein Temperaturmessfühler beschrieben der selbst der zu messenden Temperatur ausgesetzt ist, Auch dadurch ist der Erfindungsgegenstand weder vorweggenommen noch nahegelegt, denn es handelt sich dabei nicht um ein Temperatur-Fernmessverfahrfen wie bei der Erfindung, bei dem die Temperatur gerade nicht abgefühlt wird, sondern bei dem zwischen Messeinrichtung (Antenne) und Messobjekt (Kochgeschirrboden) eine Trennschicht ("Ceran"-Kochfläche) angeordnet ist.

Um das elektromagnetische Feld der Sende-Einrichtung möglichst weitgehend im Kochgeschirrboden zu konzentrieren und damit genügend stark dämpfende Wirbelströme zu erzeugen besteht der Kochgeschirrboden aus ferromagnetischem Material, z.B. aus Stahl (wie alle emaillierten Kochgeschirre) oder aus Chromstahl (wie induktionstaugliche Edelstahlgeschirre, bei denen zumindest der Unterboden aus Chromstahl besteht). Es genügt aber auch, in den Boden eines normalen Edelstahl-Kochgeschirrs, das aus Chromnickelstahl besteht, in der Mitte von unten eine Chromstahlronde, etwa mit den Abmessungen eines Fünfmarkstücks, einzusetzen. Dieses Material muss einen definierten spezifischen Widerstand und einen definierten Temperaturkoeffizienten des spezifischen Widerstands besitzen, weil auf diese Materialkonstanten die Sende-Einrichtung und deren Solltemperatureinstellung abgestimmt sind.

Die Antenne der Sende-Einrichtung ist dicht unter der Kochfläche, zentrisch zum Kochheizkörper angeordnet. Da sie im Strahlungsbereich des Kochheizkörpers liegt sollte ihre Wicklung aus Material mit verschwindendem oder zumindest gegenüber dem Kochgeschirrboden kleinem Temperaturkoeffizienten (z.B. aus Konstantan) bestehen, um Messwertverfälschungen auszuschliessen.

Es ist zweckmässig, die Antenne in einen nach oben offenen, ferromagnetischen, elektrisch nicht leitenden Kern (z.B. aus Ferrit) einzubetten, sodass der magnetische Fluss des Kerns durch die quasi als Luftspalt wirkende Kochfläche hindurch über den Kochgeschirrboden geschlossen ist. Dadurch werden auch mögliche Störeinflüsse durch andere Teile der Kochstelle ausgeschaltet.

Wenn der Heizdraht des Kochheizkörpers als Spirale angelegt ist, so kann er, mit überlagerter Messfrequenz, ggf. selbst als Antenne benutzt werden.

Das erfindungsgemässe Kochsystem kann nicht nur bei konventionell durch Wärmestrahlung beheizten Kochstellen, sondern auch bei Induktionskochstellen eingesetzt werden.

Bei Gasherden, sowohl ohne geschlossene Kochfläche als auch mit Ceran-Kochfläche, ist das Gleiche möglich.

Bei einer zweiten Ausführungsform der Erfindung ist in einer Aussparung im Zentrum des Kochgeschirrbodens als Temperaturfühler ein elektrischer Schwingkreis und unter der Kochfläche eine Sende/Empfangs-Einrichtung mit Solltemperatur-Einstellung angeordnet, deren Antenne sich dicht unter der Kochfläche zentrisch zum Kochheizkörper befindet. Als passive Einheit arbeitet der Temperaturfühler ohne Energiequelle, ist für Betriebstemperaturen bis zu 300 °C ausgelegt, steht in direktem Wärmekontakt zum Kochgeschirrboden und ist als Geschirrspülmaschinen-taugliche Kapsel in die Aussparung im Kochgeschirrboden eingeschnappt oder mit hochhitzebeständigem Kunststoff eingegossen bzw. eingeklebt. Seine Temperatur wird laufend periodisch abgefragt. Durch Anordnung des Temperaturfühlers im Zentrum des Kochgeschirrbodens wird erreicht, dass die Funktion des Systems von der Drehstellung des Kochgeschirrs auf der Kochstelle nicht abhängt.

Die Temperaturabhängigkeit des elektrischen Schwingkreises kann durch verschiedene Massnahmen erreicht werden:

Die Kapazität seines Kondensators kann durch Verwendung eines Dielektrikums mit temperaturabhängiger Dielektrizitätskonstante, eines durch Bimetall bewegten Dielektrikums oder einer als Bimetall ausgebildeten temperaturabhängig bewegten Elektrode temperatur.abhängig gemacht werden.

Die Induktivität seiner Spule kann durch Verwendung eines Kerns mit temperaturabhängiger Permeabilität oder eines durch Bimetall bewegten Kerns temperaturabhängig gemacht werden.

In beiden Fällen ändert sich mit der Temperatur die Resonanzfrequenz des elektrischen Schwingkreises, sodass zur Abfrage ein breiteres Frequenzband benötigt wird.

Es kann aber auch ein temperaturabhängiger Widerstand eingesetzt werden, der nur die Dämpfung des elektrischen Schwingkreises beeinflusst, ohne die Resonanzfrequenz zu verändern. In diesem Falle kommt man mit einem schmalen Frequenzband zur Abfrage aus, Entweder kann ein handelsüblicher Heißleiter verwendet werden, oder Material und Querschnitt des Spulendrahts werden so gewählt, dass sich allein daraus die gewünschte Temperaturabhängigkeit des Dämpfungsverhaltens des elektrischen Schwingkreises ergibt.

In der Sende/Empfangs-Einrichtung wird dann mit bekannten Mitteln aus der Dämpfungscharakteristik die Temperatur hergeleitet.

Im Rahmen der Erfindung liegt auch die Anwendung anderer bekannter funktechnischer Übertragungsverfahren mit passiven Transpondern als Temperaturfühlern. Es sind jedoch noch keine Mikroprozessoren verfügbar, die bis zu 300 °C aushalten und in den Temperaturfühler im Kochgeschirrboden eingebaut werden könnten.

In weiterer Ausbildung der Erfindung kann das Resonanzsignal des Temperaturfühlers im Kochgeschirrboden auch zur Kochgeschirrerkennung, d.h. zur gänzlichen Abschaltung der Kochleistung der betreffenden Kochstelle bei Unterschreiten eines bestimmten Resonanzsignal-Pegels, eingesetzt werden. Diese Einrichtung funktioniert sowohl bei Hochheben des Kochgeschirrs um eine bestimmte Distanz (z.B. 3 cm) als auch beim seitlichen Verschieben um eine entsprechende Distanz.

Eine weitere, völlig neue Möglichkeit besteht darin, das Resonanzsignal dafür zu benutzen, bei Überschreiten eines bestimmten Pegels, d.h. bei Aufsetzen eines Kochgeschirrs mit Temperaturfühler, die selbsttätige Umschaltung der betreffenden Kochstelle von Normalbetrieb auf Thermostatbetrieb zu bewirken. Normalbetrieb bedeutet dabei die Benutzung konventioneller Kochgeschirre ohne Temperaturfühler, wobei am Stellknopf die Kochleistung eingestellt wird. Thermostatbetrieb bedeutet die Benutzung von Kochgeschirren mit Temperaturfühler, wobei an demselben Stellknopf die Temperatur eingestellt wird. Dabei empfiehlt es sich, am Stellknopf zwei entsprechend alternativ beleuchtete Skalen vorzusehen. So erhält man ein Kochfeld, auf dem sowohl konventionelle Kochgeschirre (die Hausfrau kann ihre alten Töpfe weiter verwenden!) als auch die neuen Thermostat-Kochgeschirre eingesetzt werden können, wobei "Das denkende Kochfeld" selbst erkennt, ob ein konventionelles Kochgeschirr (Kochleistungsskala am Stellknopf beleuchtet), ein Thermostat-Kochgeschirr (Temperaturskala am Stellknopf beleuchtet) oder überhaupt kein Kochgeschirr (Beleuchtung beider Skalen am Stellknopf ausgeschaltet) auf der betreffenden Kochstelle steht.

Entsprechende Möglichkeiten bestehen, wenn, wie im ersten und dritten Teil der Erfindung beschrieben, der Kochgeschirrboden selbst zur drahtlosen Messung der Temperatur herangezogen wird.

Eine dritte Ausführungsform der Erfindung ermittelt die Temperatur des Kochgeschirrbodens vorwiegend über die Temperaturabhängigkeit seiner Permeabilität, beispielsweise dadurch, dass die Permeabilität des Kochgeschirrbodens die Induktivitäten von bzw. die elektromagnetische Kopplung zwischen zwei dicht unter der Kochfläche zentrisch zum Kochheizkörper angeordneten, an eine mit Solltemperatureinstellung ausgestattete Sende/Empfangs-Einrichtung angeschlossenen Antennen beeinflusst, und dass in der Sende/Empfangs-Einrichtung dies gemessen und als Mass für die Temperatur des Kochgeschirrbodens ausgewertet wird.

Insbesondere bei dieser dritten Ausführungsform ist es zweckmässig, die Heizspirale des Kochheizkörpers aus nicht ferromagnetischem Material herzustellen, da sonst die Temperaturabhängigkeit der Permeabilität der Heizspirale die Messung verfälschen kann. Aus dem gleichen Grund sollte auch die äussere Schale, in welche der Kochheizkörper eingebettet ist, aus nicht ferromagnetischem Material bestehen, dessen elektrischer Widerstand ausserdem temperaturunabhängig ist. Die Schale kann sogar nichtmetallisch sein oder ganz fortgelassen werden. Besteht sie aus nicht ferromagnetischem Material mit temperaturunabhängigem Widerstand (Z.B. "Isotan"), so ist es zweckmässig, sie im Zentrum mit einer Ausstülpung nach oben zur Aufnahme der Antenne(n) zu versehen. Diese Ausstülpung schirmt die Antenne(n) weitgehend von Einflüssen der Heizspirale ab, sowohl was die Temperaturabhängigkeit von Permeabilität und Widerstand der Heizspirale als auch was den Feldeinfluss durch den Heizstrom betrifft. Zum Schutz der Antenne(n) vor Zerstörung ist die Ausstülpung mit einer Wärmeisolation versehen. Zusätzlich kann die Antenne im Bedarfsfall von unten gekühlt werden, z.B. durch einen kleinen Ventilator, eine heat-pipe, ein Peltier-Element oder dergl. Die untere Öffnung der Ausstülpung kann zur Abschirmung durch ein nicht ferromagnetisches Metallgitter mit temperaturunabhängigem Widerstand abgedeckt sein, sodass das meist ferromagnetische Chassis des Kochfeldes die Antenne nicht beeinflussen kann. Insgesamt sollten sich im Feld der Antenne ausser dem Kochgeschirrboden keine anderen, wechselnden Temperaturen ausgesetzten Teile befinden, die ferromagnetisch sind und deren Widerstand von der Temperatur abhängt.

Unter Kostengesichtspunkten ist es vorteilhaft, in einem Kochfeld nur eine einzige Sende/Empfangs-Einrichtung vorzusehen, der mehrere Antennen für die verschiedenen Kochstellen eines Kochfeldes zugeordnet sind, und diese periodisch nacheinander abzufragen. Dabei wird gleichzeitig der jeweils zugeordnete Stellknopf bzw. Touch-Sensor bezüglich seiner Solltemperatur-Einstellung abgefragt. Da die Zeitkonstanten der Wärmeträgheit des Kochsystems wesentlich größer sind als diejenigen des Funksystems, können so von einer einzigen Sende/Empfangs-Einrichtung ohne Funktionsnachteile mehrere Kochstellen abgefragt und geregelt werden.

Zur Anpassung der Temperatureinstellkennlinie an unterschiedliche Kochgeschirrboden-Materialien kann die Kochstelle mit einer Kalibriereinrichtung versehen werden, bei deren Betätigung die thermostatische itegelung nach der Erfindung derart in Funktion gesetzt wird, dass die Temperatur, auf der sich der Kochgeschirrboden im Moment der Betätigung befindet, vom Moment der Betätigung an konstant gehalten wird. Diese Kalibriereinrichtung kann entweder als Zusatzeinrichtung zu einer konventionellen Kochstelle mit Leistungseinstellung ausgebildet sein. In diesem Falle kann die Wirksamkeit der Kalibrierung z.B. durch erneute Betätigung des Leistungsstellers wieder aufgehoben werden. Oder die Kalibrierungseinrichtung ist Teil einer Kochstelle mit Temperatureinstellung nach der Erfindung. Dann bewirkt die Betätigung der Kalibriereinrichtung eine Parallelverschiebung der Temperatureinstellkennlinie und bleibt bis zur nächsten Betätigung, wenn z.B. ein anderes Kochgeschirr mit abweichenden Materialeigenschaften aufgesetzt wird, bestehen,

Es empfiehlt sich, die Kalibrierung am Siedepunkt als dem wichtigsten Bereich der Temperatureinstellkennlinie vorzunehmen.

Mit heutigen Mitteln ist es sogar ohne weiteres möglich, die Kalibrierung vollautomatisch von der Elektronik vornehmen zu lassen, indem man von der Elektronik bei eingeschalteter Kochleistung den Temperaturanstieg des Bodens eines wassergefüllten Kochgeschirrs in seinem zeitlichen Verlauf registrieren und, sobald die Temperatur (am Siedepunkt) nicht weiter ansteigt, die Kalibrierung selbsttätig vornehmen lässt. So ergibt sich eine Kochstelle, die sich vollautomatisch auf verschiedene Kochgeschirrboden-Materialien einstellt.

Weitere funktionelle Ausgestaltungen des Erfindungsgegenstandes, die hier nicht alle aufgezählt werden können, sind denkbar. So kann z.B. bei gegebener Kochgutmenge aus dem zeitlichen Verlauf des Anstiegs der Temperatur des Kochgeschirrbodens auf die Art des Kochguts geschlossen werden. Bei zum Anbrennen neigendem Kochgut (z.B. Milch, Reis, Pudding) geht beispielsweise der Temperaturanstieg schneller vonstatten als bei Wasser, weil die Konvektion und damit die Wärmeabgabe des Kochgeschirrbodens an das Kochgut vermindert ist. Dies kann zur automatischen Herabsetzung der Kochleistung mit dem Ziel einer langsameren, d.h. schonenderen Erhitzung des Kochguts genutzt werden.

In jedem Moment die Temperatur des Kochgeschirrbodens zu kennen bietet in der Tat eine Fülle neuer kochtechnischer und brattechnischer Möglichkeiten.

### Ausführungsbeispiele

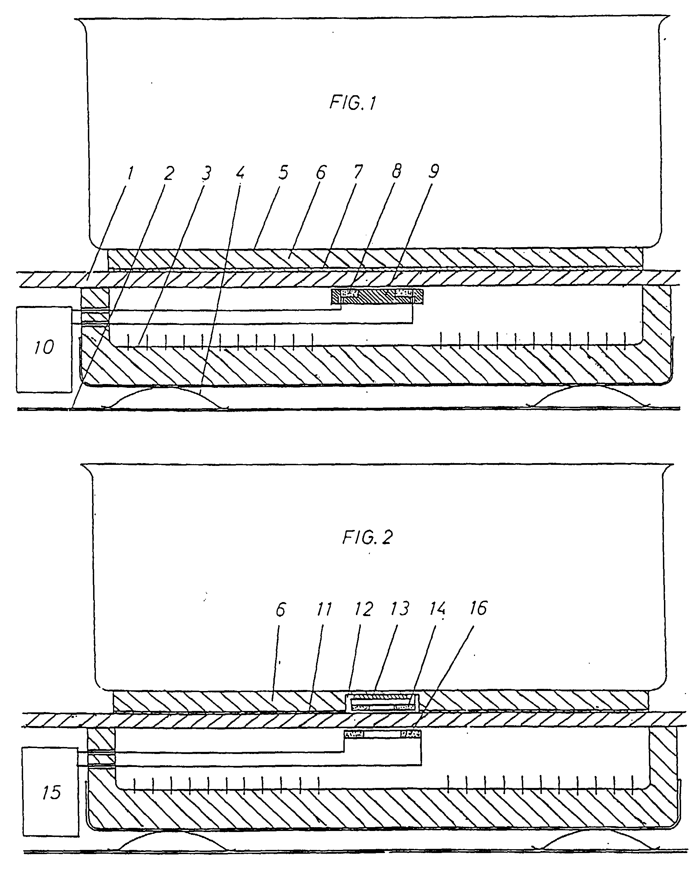

In Figur 1 ist ein Ausführungsbeispiel nach Patentansprüchen 1 bis 3 schematisch dargestellt. Sie zeigt eine Kochstelle als Ausschnitt aus einem 4 cm starken Kochfeld, wie es zum Einbau in Küchenarbeitsplatten geeignet ist. Die Kochstelle besteht in bekannter Weise aus der "Ceran"-Kochfläche (1), dem Chassis (2) und dem Kochheizkörper (3), der durch Blattfedern (4), die sich am Chassis (2) abstützen, von unten gegen die Kochfläche (1) gedrückt wird. Auf der Kochfläche (1) steht das Edelstahl-Kochgeschirr (5) mit einem handelsüblichen Sandwichboden, der aus einer Zwischenschicht (6) aus Aluminium zur Wärmeverteilung und einem Unterboden (7) besteht. Während das Kochgeschirr (5) normalerweise aus nicht ferromagnetischem Chromnickelstahl besteht, muss der Kochgeschirr-Unterboden (7) ferromagnetisch sein und besteht daher aus Chromstahl. Solche Edelstahl-Kochgeschirre mit Chromstahl-Unterboden sind als für Induktionsherde geeignete Ausführung am Markt erhältlich. Die Temperatur des Kochgeschirr-Unterbodens (7) wird von der Antenne (8) abgefragt, die in den nach oben offenen Ferritkern (9) eingebettet ist. Der magnetische Fluss des Ferritkerns (9) schliesst sich durch die quasi als Luftspalt wirkende Kochfläche (1) hindurch im Kochgeschirr-Unterboden (7). Die Antenne (8) wird von der Sende-Einrichtung (10) mit Hochfrequenz gespeist. Der Kochgeschirr-Unterboden (7) wirkt als temperaturabhängige Dämpfung des Hochfrequenzkreises, die in der Sende-Einrichtung (10) gemessen und als Mass für die Ist-Temperatur des Unterbodens (7) ausgewertet wird. Die Soll-Temperatur wird mit einer nicht dargestellten Vorrichtung an der Sende-Einrichtung (10) eingestellt. In der Sende-Einrichtung (10) werden Ist- und Soll- Temperatur miteinander verglichen und die Differenz zur thermostatischen Regelung der Temperatur des Kochgeschirr-Unterbodens (7) durch Steuerung der Leistung des Kochheizkörpers (3) eingesetzt.

Anstelle des Edelstahl-Kochgeschirrs mit ferromagnetischem Chromstahl-Unterboden (7) kann hier auch ein aus ferromagnetischem Stahl bestehendes Kochgeschirr eingesetzt werden, wie es in emaillierter Ausführung im Handel zu haben ist.

Figur 2 zeigt ein Ausführungsbeispiel nach Patentansprüchen 1 und 4. Die Anordnung von Kochfeld und Kochgeschirr ist die gleiche wie in Figur 1. Jedoch besteht in diesem Falle der Kochgeschirr-Unterboden (11) aus beliebigem Material. Im Zentrum des Kochgeschirrbodens (6), (11), ist eine Aussparung (12) eingefräst, in die ein aus Kondensator (13) und Spule (14) bestehender elektrischer Schwingkreis eingesetzt ist. Das temperaturabhängige Dielektrikum des Kondensators (13) steht in direktem Wärmekontakt mit der Zwischenschicht (6) des Sandwichbodens. Daher ist die Eigenfrequenz des elektrischen Schwingkreises (13), (14), abhängig von der Temperatur der Kochgeschirrboden-Zwischenschicht (6). Die thermische Rückführung im Regelprozess ist hier etwas geringer als im Ausführungsbeispiel nach Figur 1. Durch die mit (nicht dargestellter) Solltemperatur-Einstellung versehene Sende/Empfangs-Einrichtung (15) wird die Antenne (16) periodisch auf Resonanz mit dem elektrischen Schwingkreis (13), (14), abgestimmt, aus der Resonanzfrequenz ein Mass für die Ist-Temperatur des Kochgeschirrbodens (6), (11), gewonnen und zur thermostatischen Regelung durch Steuerung der Kochleistung eingesetzt.

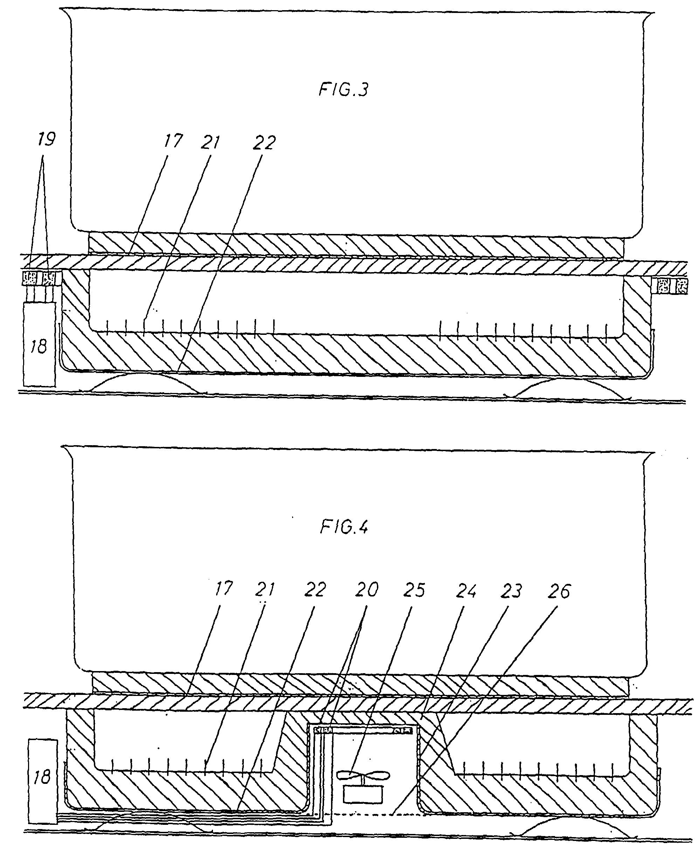

Die Figuren 3 und 4 zeigen Ausführungsbeispiele nach Patentansprüchen 1, 7 und 8. Der Unterboden (17) des Kochgeschirrs (5) besteht aus ferromagnetischem Material mit definierter Permeabilität und definiertem Temperaturkoeffizienten der Permeabilität. Zentrisch zum Kochheizkörper (3) sind bei dieser Ausführungsform zwei konzentrisch miteinander gewickelte Antennen (Doppelantenne) angeordnet und an die Sende/Empfangs-Einrichtung (18) angeschlossen. In Fig. 3 liegt die Doppelantenne (19) ausserhalb des Kochheizkörpers (3). Dies hat den Vorteil, dass Wärmeeinflüsse auf die Doppelantenne (19) gering bleiben und dass konstruktiv unveränderte Kochheizkörper (3) verwendet werden können. Zu beachten ist in diesem Fall, dass neben der Permeabilität auch der Durchmesser des Kochgeschirr-Unterbodens (17) die Induktivitäten von bzw. die Kopplung zwischen den zwei Antennen (19) beeinflusst, und dass eine relativ genaue Positionierung des Kochgeschirrs (5) bzw. seines Unterbodens (17) erforderlich ist. Wird das Kochgeschirr (5) seitlich verschoben, so vermindert sich die Isttemperatur, was kochtechnisch erwünscht sein kann. In Fig. 4 liegt dagegen die Doppelantenne (20) innerhalb des Kochheizkörpers (3), und zwar in einer nach oben gerichteten Ausstülpung (23) der äusseren Schale (22), die aus nicht ferromagnetischem Material besteht und von der Wärmeisolation (24) umgeben ist. Diese Anordnung ist unempfindlich gegen seitliche Verschiebungen des Kochgeschirrs (3) und weitgehend unabhängig vom Durchmesser des Kochgeschirr-Unterbodens (17). In beiden Fällen bestehen die Heizspirale (21) und die Schale (22) aus nicht ferromagnetischem Material mit temperaturunabhängigem Widerstand. Bei der Anordnung nach Fig. 4 wirkt die Ausstülpung (23), welche die Doppelantenne (20) umschliesst, als Abschirmung gegenüber Einflüssen der Heizspirale (21) auf die Doppelantenne (20), sodass die Heizspirale (21) in diesem Falle nicht unbedingt aus nicht ferromagnetischem Material bestehen muss. Da die Ausstülpung (23) nach unten offen ist kann die Doppelantenne (20) zusätzlich von unten gekühlt werden, z.B. durch den Ventilator (25). Gegen unerwünschte Einflüsse des meist aus ferromagnetischem Material bestehenden Chassis (2) ist die Doppelantenne (20) durch das nicht ferromagnetische, aus Material mit temperaturunabhängigem Widerstand bestehende Metallgitter (26), welches die Ausstülpung (23) von unten abdeckt, abgeschirmt.

## Patentansprüche

1. Kochsystem, bestehend aus einem Kochfeld mit einer für elektromagnetische Felder durchlässigen Kochfläche (1) und einem darauf stehenden, durch die Kochfläche (1) hindurch fremdbeheizten Kochgeschirr (5), dessen Boden temperaturgeregelt ist, gekennzeichnet durch Mittel, die die Temperatur des Kochgeschirrbodens elektromagnetisch drahtlos von unten durch die Kochfläche (1) hindurch abgefragen und zur thermostatischen Regelung durch Steuerung der Kochleistung einsetzen.

2. Kochsystem nach Anspruch 1, dadurch gekennzeichnet, dass der Kochgeschirrboden (7) aus ferromagnetischem Material mit definiertem spezifischem Widerstand und definiertem Temperaturkoeffizienten des spezifischen Widerstands besteht, und durch Mittel, durch die der elektrische Widerstand des Kochgeschirrbodens (7) als Dämpfung einer unter der Kochfläche (1) angeordneten, mit Solltemperatur-einstellung ausgestatteten Sende-Einrichtung (10) durch eine dicht unter der Kochfläche (1) zentrisch zum Kochheizkörper (3) angeordnete Antenne (8) gemessen und als Mass für die Temperatur des Kochgeschirrbodens (1) ausgewertet wird.

3. Kochsystem nach Anspruch 2, gekennzeichnet durch einen dicht unter der Kochfläche (1) zentrisch zum Kochheizkörper (3) angeordneten, nach oben offenen, ferromagnetischen, elektrisch nicht leitenden Kern (9), in den die Antenne (8) eingebettet ist, wobei der Kochgeschirrboden (7) den magnetischen Fluss des Kerns (9) durch die quasi als Luftspalt wirkende Kochfläche (1) hindurch schliesst.

4. Kochsystem nach Anspruch 1, dadurch gekennzeichnet, dass in einer Aussparung (12) im Zentrum des Kochgeschirrbodens (6), (11), als Temperaturfühler ein elektrischer Schwingkreis (13), (14), und unter der Kochfläche (1) eine Sende/Empfangs-Einrichtung (15) mit Solltemperatur-Einstellung angeordnet ist, deren Antenne (16) sich dicht unter der Kochfläche (1) zentrisch zum Kochheizkörper (3) befindet, und dass die Kapazität des Kondensators (13) oder die Induktivität der Spule (14) des elektrischen Schwingkreises (13), (14), von der Temperatur abhängt oder seine Dämpfung durch einen temperaturabhängigen Widerstand bewirkt wird.

5. Kochsystem nach Anspruch 4, gekennzeichnet durch Mittel, durch die das Resonanzsignal des Temperaturfühlers im Kochgeschirrboden auch zur Kochgeschirrerkennung, d.h. zur gänzlichen Abschaltung der Kochleistung der betreffenden Kochstelle bei Unterschreiten eines bestimmten Resonanzsignal-Pegels eingasetzt wird.

6. Kochsystem nach Anspruch 4, gekennzeichnet durch Mittel, durch die das Resonanzsignal des Temperaturfühlers im Kochgeschirrboden bei Überschreiten eines bestimmten Pegels die selbsttätige Umschaltung der betreffenden Kochstelle von Normalbetrieb auf Thermostatbetrieb bewirkt.

7. Kochsystem nach Anspruch 1, dadurch gekennzeichnet, dass der Kochgeschirrboden (17) aus ferromagnetischem Material mit definierter Permeabilität und definiertem Temperaturkoeffizienten der Permeabilität besteht, dass vorwiegend die Permeabilität des Kochgeschirrbodens (17) die Induktivitäten von bzw. die elektromagnetische Kopplung zwischen zwei dicht unter der Kochfläche (1) zentrisch zum Kochheizkörper (3) angeordneten, an eine mit Solltemperatureinstellung ausgestattete Sende/Empfangs-Einrichtung (18) angeschlossenen Antennen (19) oder (20) beeinflusst, und dass in der Sende/Empfangs-Einrichtung (18) dies gemessen und als Mass für die Temperatur des Kochgeschirrbodens ( 17) ausgewertet wird.

8. Kochsystem nach Anspruch 7, dadurch gekennzeichnet, dass die Heizspirale (21) des Kochheizkörpers (3) aus nicht ferromagnetischem Widerstandsmaterial besteht, dass die äussere Schale (22) des Kochheizkörpers (3) ebenfalls aus nicht ferromagnetischem Material mit temperaturunabhängigem Widerstand besteht, und dass diese Schale (22) im Zentrum zur Aufnamhe der Antenne(n) (20) eine Ausstülpung (23) nach oben mit Wärmeisolation (24) aufweist.

9. Kochsystem nach einem der vorhergehenden Ansprüche, dadurch gekennzeichnet, dass einer einzigen Sende/Empfangs-Einrichtung mehrere Antennen für verschiedene Kochstellen eines Kochfeldes zugeordnet sind, die periodisch nacheinander abgefragt werden.

10. Kochsystem nach einem der vorhergehenden Ansprüche, gekennzeichnet durch eine Kalibriereinrichtung, bei deren Betätigung die thermostatische Regelung derart in Funktion gesetzt wird, dass die Temperatur von diesem Moment an konstant gehalten wird, wobei diese Kalibriereinrichtung vorzugsweise am Siedepunkt und vollautomatisch betätigt wird.

## Claims

1. Cooking system consisting of a cooking platform with a cooking surface (1) permeable to electromagnetic fields and a cooking pot (5) standing on it, externally heated through the cooking surface (1). The bottom of the cooking pot is temperature controlled, characterised by means which interrogate the temperature of the cooking-pot bottom electromagnetically, without wires from below through the cooking surface (1) and which are used for thermostatic regulation by controlling the cooking power.

2. Cooking system according to Claim 1 characterised in that the cooking-pot bottom (7) consists of ferromagnetic material with a defined specific resistance and a defined temperature coefficient of specific resistance and by means through which the electrical resistance of the cooking-pot bottom (7) as attenuator of a transmitting device (10) arranged under the cooking surface (1) and fitted with a set-temperature adjustment is measured by an antenna (8) arranged close below the cooking surface (1) and centrally to the cooking heater (3) and is evaluated as a measure for the temperature of the cooking-pot bottom (7).

3. Cooking system according to Claim 2 characterised by a core (9) arranged close under the cooking surface (1) and centrally to the cooking heater (3), open at the top, ferromagnetic and nonconducting electrically, in which the antenna (8) is embedded and whereby the cooking-pot bottom (7) closes the magnetic flux of the core (9) through the cooking surface (1 ) which works as a quasi-airgap.

4. Cooking system according to Claim 1, characterised in that in a recess (12) in the centre of the cooking-pot bottom (6), (11), an electrical oscillating circuit (13), (14) is arranged as temperature sensor and a transmitting/receiving device (15) with set-temperature adjustment is arranged under the cooking surface (1), the antenna (16) of which is located close under the cooking surface (1) centrally to the cooking heater (3) and that the capacitance of the capacitor (13) or the inductance of the coil (14) of the electrical oscillating circuit (13), (14) depends on the temperature or its attenuation depends on a temperature-dependent resistance.

5. Cooking system according to Claim 4 characterised by means through which the resonance signal from the temperature sensor in the cooking-pot bottom is also used for cooking-pot detection, i.e. for the complete switch-off of the cooking power of the relevant cooking hob when a certain resonance signal level is undercut.

6. Cooking system according to Claim 4 characterised by means through which the resonance signal from the temperature sensor in the cooking-pot bottom causes the automatic switchover of the relevant cooking hob from normal operation to thermostatic operation on exceeding a certain level.

7. Cooking system according to Claim 1 characterised in that the cooking-pot bottom (17) is made from ferromagnetic material with defined permeability and defined temperature coefficient of permeability, that primarily the permeability of the cooking-pot bottom (17) influences the inductance of, or the electromagnetic coupling between, two antennas (19) or (20) arranged close under the cooking surface (1) centrally to the cooking heater (3) and connected to a transmitting/receiving device (18) fitted with a set-temperature adjustment and that this is measured in the transmitting/receiving device (18) and is evaluated as the measure for the temperature of the cooking-pot bottom (17).

8. Cooking system according to Claim 7 characterised in that the heater coil (21) of the cooking heater (3) consists of non-ferromagnetic resistance material, that the outer shell (22) of the cooking heater (3) also consists of non-ferromagnetic material with temperature independent resistance and that this shell (22) has in the centre a protuberance (23) with thermal insulation (24) at the top for accommodating the antenna(s) (20).

9. Cooking system according to one of the above claims characterised in that a number of antennas for different cooking hobs on a cooking platform, which are interrogated periodically and consecutively, are assigned to one single transmitting/receiving device.

10. Cooking system according to one of the above claims characterised by a calibration device which when activated, causes the thermostatic regulation to start functioning such that the temperature from this moment onwards is maintained constant, whereby this calibration device is preferentially activated at the boiling point and fully automatically.

## Revendications

1. Système de cuisson, composé d'une table de cuisson munie d'une plaque de cuisson (1) perméable aux champs électromagnétiques et d'un récipient de cuisson (5) dont le fond est régulé en température et qui est placé sur celle-ci et chauffé par l'extérieur au travers de la plaque de cuisson (1), caractérisé par des moyens qui détectent sans fil et de manière électromagnétique la température du fond du récipient de cuisson à travers la plaque de cuisson (1) et qui servent à la régulation thermostatique en commandant de la puissance de cuisson.

2. Système de cuisson selon la revendication 1, caractérisé par le fait que le fond du récipient de cuisson (7) est réalisé en un matériau ferromagnétique ayant une résistance spécifique donnée et un coefficient de température donné de la résistance spécifique, et par des moyens avec lesquels la résistance électrique du fond du récipient de cuisson (7) est mesurée par le biais d'une antenne (8) disposée directement sous la plaque de cuisson (1) au centre du corps chauffant de cuisson (3) sous la forme de l'affaiblissement d'un dispositif d'émission (10) disposé sous la plaque de cuisson (1) et équipé d'un dispositif de réglage de la température de consigne puis interprétée comme indication de la température du fond du récipient de cuisson (7).

3. Système de cuisson selon la revendication 2, caractérisé par un noyau (9) ferromagnétique non conducteur d'électricité, ouvert vers le haut, disposé directement sous la plaque de cuisson (1) au centre du corps chauffant de cuisson (3) dans lequel est logée l'antenne (8), le fond du récipient de cuisson (7) venant fermer le circuit magnétique du noyau (9) à travers la plaque de cuisson (1) qui fait quasiment office d'entrefer.

4. Système de cuisson selon la revendication 1, caractérisé par le fait qu'un circuit oscillant électrique (13), (14) faisant office de capteur de température est disposé dans un creux (12) au centre du fond du récipient de cuisson (6), (11) et qu'un dispositif émetteur/récepteur (15) avec réglage de la température de consigne est disposé sous la plaque de cuisson (1), l'antenne (16) de celui-ci se trouvant directement sous la plaque de cuisson (1) au centre du corps chauffant de cuisson (3), et que la capacité du condensateur (13) ou l'inductance de la bobine (14) du circuit oscillant électrique (13), (14) dépend de la température ou alors son affaiblissement est déterminé par une résistance dépendante de la température.

5. Système de cuisson selon la revendication 4, caractérisé par des moyens à l'aide desquels le signal de résonance du capteur de température dans le fond du récipient de cuisson est également utilisé pour identifier le récipient de cuisson, c'est à dire pour couper complètement l'énergie de cuisson du point de cuisson correspondant si le niveau du signal de résonance devient inférieur à un seuil donné.

6. Système de cuisson selon la revendication 4, caractérisé par des moyens à l'aide desquels le signal de résonance du capteur de température provoque la commutation automatique du point de cuisson concerné du mode de fonctionnement normal au mode de fonctionnement thermostatique en cas de dépassement d'un seuil donné.

7. Système de cuisson selon la revendication 1, caractérisé par le fait que le fond du récipient de cuisson (17) est réalisé en un matériau ferromagnétique ayant une perméabilité définie et un coefficient de température défini de la perméabilité, que la perméabilité du fond du récipient de cuisson (17) influence directement l'inductance de ou le couplage électromagnétique entre deux antennes (19) ou (20) raccordées à un dispositif émetteur/récepteur (18) équipé d'un dispositif de réglage de la température de consigne et disposées directement sous la plaque de cuisson (1) au centre du corps chauffant de cuisson (3), et que celle-ci est mesurée dans le dispositif émetteur/récepteur (18) interprétée comme indication de la température du fond du récipient de cuisson (17).

8. Système de cuisson selon la revendication 7, caractérisé par le fait que la boude de chauffage (21) du corps chauffant de cuisson (3) est réalisée dans un matériau résistif non ferromagnétique, que la coque externe (22) du corps chauffant de cuisson (3) est également réalisée dans un matériau non ferromagnétique ayant une résistance indépendante de la température, et que cette coque (22) présente en son centre une excroissance (23) vers le haut munie d'un isolant thermique (24) et destinée à recevoir la (les) antenne(s) (20).

9. Système de cuisson selon l'une des revendications précédentes, caractérisé par le fait que plusieurs antennes pour différents points de cuisson d'une table de cuisson sont associées à un seul dispositif émetteur/récepteur et interrogées périodiquement l'une après l'autre.

10. Système de cuisson selon l'une des revendications précédentes, caractérisé par un dispositif de calibrage qui, lorsqu'il est actionné, amène le dispositif de régulation thermostatique dans un mode de fonctionnement tel que la température est maintenue constante à partir de ce moment, ce dispositif de calibrage étant commandé de préférence au point d'ébullition et de manière entièrement automatique.
